# EUROPEAN PATENT APPLICATION

(11) **EP 4 807 585 A1**
(43) Date of publication of application: **16.09.2026**
(21) Application number: 24899535.9
(22) Date of filing: 01.11.2024
(51) Int. Cl.: G06F 17/11

(54) **TASK PROCESSING METHOD AND APPARATUS**

(30) Priority: 07.12.2023 CN 202311680958
(71) Applicant: Huawei Technologies Co., Ltd., Shenzhen, Guangdong 518129 (CN)
(72) Inventor: WANG, Xinliang, Shenzhen, Guangdong 518129 (CN); WANG, Qin, Shenzhen, Guangdong 518129 (CN); DING, Zhaohui, Shenzhen, Guangdong 518129 (CN)
(74) Representative: Goddar, Heinz J.
(86) International application number: PCT/CN2024/129354
(87) International publication number: WO 2025/118892

(57) **Abstract**

A task processing method and apparatus are provided, and relate to the field of computer technologies, to quickly process a grid compute task and improve task processing efficiency. The method includes: obtaining a grid compute task in an application, where the grid compute task includes a plurality of subtasks, and dependency relationships between the plurality of subtasks conform to a dependency rule; analyzing a dependency relationship between a first subtask and another subtask in the plurality of subtasks, and determining the dependency rule; analyzing a dependency relationship between other subtasks in the plurality of subtasks according to the dependency rule; and allocating a compute resource to the plurality of subtasks based on the dependency relationships between the plurality of subtasks, and executing the plurality of subtasks.

## Description

This application claims priority to Chinese Patent Application No. 202311680958.5, filed with the China National Intellectual Property Administration on December 7, 2023 and entitled "TASK PROCESSING METHOD AND APPARATUS", which is incorporated herein by reference in its entirety.

### TECHNICAL FIELD

This application relates to the field of computer technologies, and in particular, to a task processing method and apparatus.

### BACKGROUND

In the field of high performance computing (high performance computing, HPC), compute tasks in most applications are converted, after mathematical and physical modeling, into the solution of partial differential equations.

A general approach to solving partial differential equations is to perform numerical discretization on the partial differential equations, so as to translate the problem into the solution of a large-scale sparse linear equation system. A method for solving the sparse linear equation system is an iterative method. A problem of solving the sparse linear equation system includes a problem of solving a sparse triangular systems (sparse triangular solve, SpTRSV).

Currently, for this computational task of solving the sparse triangular systems, an amount of memory access during task processing is large, and the task processing efficiency is relatively low.

### SUMMARY

This application provides a task processing method and apparatus, to quickly process a grid compute task and improve task processing efficiency.

The following technical solutions are used in this application.

According to a first aspect, this application provides a task processing method, including: obtaining a grid compute task in an application, where the grid compute task includes a plurality of subtasks, and dependency relationships between the plurality of subtasks conform to a dependency rule; analyzing a dependency relationship between a first subtask and another subtask in the plurality of subtasks, and determining the dependency rule; analyzing a dependency relationship between other subtasks in the plurality of subtasks according to the dependency rule; and allocating a compute resource to the plurality of subtasks based on the dependency relationships between the plurality of subtasks, and executing the plurality of subtasks.

In this application, because the dependency relationship between the plurality of subtasks of the grid compute task conforms to the dependency rule, a dependency relationship between one subtask and another subtask in the plurality of subtasks is analyzed to obtain the dependency rule, and then the dependency relationship between the other subtasks is quickly obtained through analysis according to the dependency rule. Then, the compute resource is allocated to the plurality of subtasks based on the dependency relationships between the plurality of subtasks, and the plurality of subtasks are executed. In this way, the grid compute task can be quickly processed, and task processing efficiency can be improved.

In a possible implementation, the grid compute task is solving a triangular system through matrix multiplication.

In a possible implementation, the task processing method provided in this application further includes: for each of the plurality of subtasks, deleting a duplicated dependency relationship from dependency relationships between the subtask and other subtasks, to prune the dependency relationships between the plurality of subtasks. Pruning the redundant dependency relationship can simplify the dependency relationship, and facilitate subsequent resource allocation.

In a possible implementation, the method provided in this application further includes: for the first subtask and a second subtask that are executed in parallel and have no dependency relationship, adjusting a storage location of data of the first subtask or a storage location of data of the second subtask, so that the storage location of the data of the first subtask and the storage location of the data of the second subtask are contiguous, thereby saving memory bandwidth.

In a possible implementation, a grid of the grid compute task is a structured grid, and a plurality of vertices of the structured grid are in a one-to-one correspondence with the plurality of subtasks. Analyzing the dependency relationship between the first subtask and the another subtask in the plurality of subtasks, and determining the dependency rule includes: analyzing at least one other vertex on which a first vertex corresponding to the first subtask depends; and determining the dependency rule based on a location relationship between the first vertex and the at least one other vertex.

In this application, because points in the structured grid of the grid compute task are in a one-to-one correspondence with the subtasks, the dependency rule of the subtasks is determined by analyzing the location relationship between points that have a dependency relationship in the structured grid. This helps quickly obtain the dependency relationship between the plurality of subtasks through analysis.

In a possible implementation, the structured grid is a three-dimensional structured grid, and a relationship between an index number p of a subtask of the grid compute task and coordinates (i, j, k) of a vertex of the structured grid satisfies: $p = i + j \times {n}_{x} + k \times {n}_{x} \times {n}_{y}$

Herein, *nₓ* represents a quantity of grid cells of the structured grid in an x-axis direction, and *n_{y}* represents a quantity of grid cells of the structured grid in a y-axis direction.

According to a second aspect, this application provides a compute device. The compute device includes modules configured to implement the method according to any one of the first aspect and the possible implementations of the first aspect, for example, an obtaining module, an analysis module, a processing module, a pruning module, and an adjustment module.

The compute device has a function of implementing behavior in the method instance according to the first aspect and any one of the possible implementations of the first aspect. The function may be implemented by hardware, or may be implemented by hardware executing corresponding software. The hardware or the software includes one or more modules corresponding to the foregoing function.

According to a third aspect, this application provides a compute device, including a memory and at least one processor connected to the memory. The memory is configured to store computer program code, and the computer program code includes computer instructions. When the computer instructions are executed by the at least one processor, the compute device is enabled to perform the method according to any one of the first aspect and the possible implementations of the first aspect.

According to a fourth aspect, this application provides a computer-readable storage medium, storing computer instructions. When the computer instructions are run on a computer, the method according to any one of the first aspect and the possible implementations of the first aspect is performed.

According to a fifth aspect, this application provides a computer program product. The computer program product includes computer instructions, and when the computer instructions are run on a computer, the method according to any one of the first aspect and the possible implementations of the first aspect is performed.

According to a sixth aspect, this application provides a chip system. The chip system includes a processor, configured to invoke a computer program from a memory and run the computer program, so that a compute device installed with the chip system performs the method according to any one of the first aspect and the possible implementations of the first aspect.

It should be understood that, for beneficial effects achieved by the technical solutions in the second aspect to the sixth aspect and the corresponding possible implementations in this application, refer to the foregoing technical effects in the first aspect and the corresponding possible implementations. Details are not described herein again.

### BRIEF DESCRIPTION OF DRAWINGS

FIG. 1 is a diagram 1 of a structured grid according to an embodiment of this application;
FIG. 2 is a diagram of a location of a non-zero element in a sparse triangular matrix according to an embodiment of this application;
FIG. 3A and FIG. 3B are diagrams of a location of a non-zero element in a sparse triangular matrix and a task dependency relationship according to an embodiment of this application;
FIG. 4A and FIG. 4B are diagrams of a relationship between a CSR format and a location of a non-zero element in a coefficient matrix according to an embodiment of this application;
FIG. 5 is a diagram of a hardware structure of a compute device according to an embodiment of this application;
FIG. 6 is a schematic flowchart 1 of a task processing method according to an embodiment of this application;
FIG. 7 is a diagram 2 of a structured grid according to an embodiment of this application;
FIG. 8 is a diagram of coordinates of a point in a structured grid according to an embodiment of this application;
FIG. 9 is a schematic flowchart 2 of a task processing method according to an embodiment of this application;
FIG. 10 is a diagram of a relationship between coordinates of a point in a structured grid and an index of a subtask according to an embodiment of this application;
FIG. 11 is a schematic flowchart 3 of a task processing method according to an embodiment of this application;
FIG. 12 is a diagram of a pruning result of a dependency relationship between tasks according to an embodiment of this application;
FIG. 13 is a diagram 1 of an analysis result of a dependency relationship according to an embodiment of this application;
FIG. 14 is a diagram 2 of an analysis result of a dependency relationship according to an embodiment of this application;
FIG. 15 is a schematic flowchart 4 of a task processing method according to an embodiment of this application;
FIG. 16 is a diagram of a row structure of a structured matrix according to an embodiment of this application;
FIG. 17 is a diagram of a structured matrix according to an embodiment of this application;
FIG. 18 is a diagram of a process of solving a sparse triangular systems according to an embodiment of this application;
FIG. 19 is a diagram 1 of a structure of a compute device according to an embodiment of this application; and
FIG. 20 is a diagram 2 of a structure of a compute device according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first vertex and a second vertex are intended to distinguish between different vertices but do not indicate a particular order of the vertices.

In embodiments of this application, the word such as "example" or "for example" is used to represent giving an example, an illustration, or a description. Any embodiment or design scheme described as the word "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise specified, "a plurality of" means two or more, and "a plurality of" may also be described as "at least two".

A task processing method provided in embodiments of this application may be applied to the field of high performance computing (HPC). For example, for a compute task in an application (for example, a meteorological application), a large quantity of computing problems can be efficiently resolved by using the method. In the HPC field, most computing problems in the application may be converted into problems of solving partial differential equations. A general approach to solving the partial differential equations is to perform numerical discretization on the partial differential equations, so as to translate the problem into the solution of a sparse linear equation system. Further, many methods for solving the sparse linear equation system include a computational task of solving a triangular system (namely, solving the sparse triangular systems) through matrix multiplication. Efficient processing of such a computational task has important impact on computing performance of HPC.

First, some technical terms in the task processing method and apparatus provided in embodiments of this application are explained and described.

### 1. Grid and grid compute task

First, the concept of grid is described. This idea derives from discrete solving. A contiguous computing area is discretized into several limited sub-areas, and physical variables of the sub-areas are separately solved, to obtain the physical variables in the entire computing area. Dividing the computing area into the plurality of sub-areas may be understood as a grid division process, and one sub-area is equivalent to a minimum grid cell.

In embodiments of this application, a compute task completed based on the grid idea is defined as a grid compute task. For example, for solving of a system of equations, the grid idea may be used to discretize the computing area into the several limited sub-areas, that is, divide the computing area into a plurality of grid cells, to complete solving of the system of equations. Therefore, a solving task of the system of equations is a grid compute task. In embodiments of this application, a computing area of a compute task may be referred to as a grid of the compute task, and the grid of the compute task includes a plurality of grid cells.

Optionally, the grid may be two-dimensional, three-dimensional, or multi-dimensional. A two-dimensional grid may be, for example, a quadrilateral grid, and a three-dimensional grid may be, for example, a cuboid grid or a cube grid.

It may be understood that the grid may include a structured grid and an unstructured grid. Embodiments of this application relate to the structured grid. The following describes only the structured grid, and does not describe the unstructured grid.

For the structured grid, a grid area is divided into a plurality of grid cells. Each point (which is a vertex of a grid cell in the structured grid) in the grid area has one or more neighboring grid cells, and the neighboring grid cell is a grid cell adjacent to the point in each direction. The structured grid means that all internal points in the grid area have a same quantity of neighboring grid cells of a same type. To be specific, for any two points in the grid area, for example, for a point A and a point B, a quantity of neighboring grid cells of the point A is the same as a quantity of neighboring grid cells of the point B, and a type of the neighboring cell grid of the point A is the same as a type of the neighboring cell of the point B. It should be noted that, for a point, for example, for the point A, types of a plurality of neighboring grid cells of the point A are also the same.

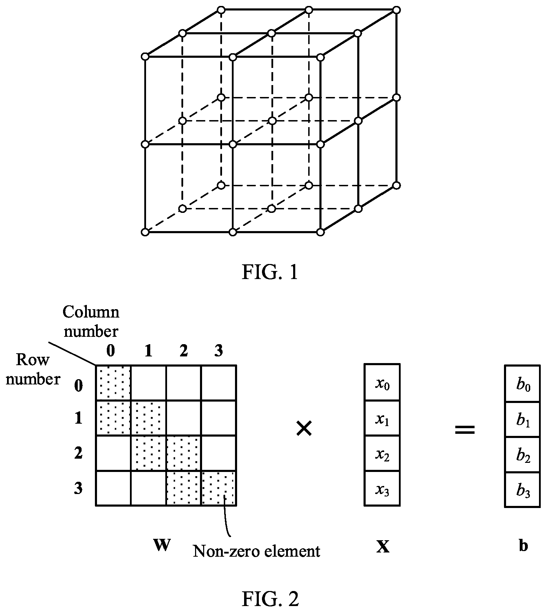

In embodiments of this application, a structured grid of a 3D19 template is used as an example for description. Refer to FIG. 1. A plurality of grid cells in the structured grid of the 3D19 template are cuboids, each vertex has eight neighboring grid cells, each grid cell is a cube, and a quantity of points in a point association group is 19.

### 2. Sparse linear equation system

First, the concept of system of linear equations is briefly described. The system of linear equations may be represented in the following matrix equation manner: $Ax = b$

Herein, **A** represents a coefficient matrix of the system of linear equations, and A ∈ *n*×*n* ; **x** is a to-be-solved solution vector in the system of linear equations, and **x** ∈ *n*×1; and b is a right-end vector in the system of linear equations, and **b** ∈ *n*×1*.*

It may be understood that a process of solving the system of linear equations is a process of obtaining the solution vector **x** through solving based on the coefficient matrix **A** and the right-end vector **b.**

For the coefficient matrix **A** of the system of linear equations, when values of most elements in the coefficient matrix **A** are 0, that is, when a proportion of a non-zero element in *n*² elements in the coefficient matrix **A** is low (for example, lower than 0.1%), it is considered that the coefficient matrix **A** is a sparse matrix. Correspondingly, when the coefficient matrix **A** in the system of linear equations is the sparse matrix, the system of linear equations is a sparse linear equation system.

### 3. Sparse triangular systems

Based on the foregoing descriptions of the concept of sparse linear systems, a sparse triangular system is a system of linear system whose coefficient matrix is a sparse triangular matrix. The sparse triangular system may be represented in the following matrix equation manner: $Wx = b$

Herein, **W** represents the coefficient matrix of the sparse triangular system, **W** is a triangular matrix, **W** is the sparse triangular matrix, and **W** ∈ *n* × *n*; **x** is a to-be-solved solution vector in the system of linear equations, and **x** ∈ *n*×1 ; and **b** is a right-end vector in the system of linear equations, and **b** ∈ *n*×1*.*

Optionally, in the sparse triangular system, the coefficient matrix **W** may be a sparse lower triangular matrix, or may be a sparse upper triangular matrix. This is not limited in embodiments of this application.

Generally, there are a direct method and an iterative method for solving the sparse linear equation system. The iterative method is to gradually approximate a solution of the equation in an iterative correction manner. In the iterative method, a preconditioner (preconditioner) is a very important module, and the preconditioner can improve a convergence speed and process an ill-conditioned (ill-conditioned) matrix.

Optionally, the iterative method may include but is not limited to a conjugate gradient method, a generalized minimal residual method, a generalized conjugate residual method, a Chebyshev method, and the like. The preconditioner may include but is not limited to an additive Schwarz algorithm, a block Jacobi algorithm, a Jacobi algorithm, a successive over-relaxation (successive over-relaxation, SOR) algorithm, an incomplete lower-upper factorization (incomplete lower-upper factorization, ILU) algorithm, a multigrid algorithm, and the like. The ILU algorithm and the SOR algorithm are the most basic preconditioners, and algorithm processes of the ILU algorithm and the SOR algorithm are simple and have good convergence. The SOR algorithm and the ILU algorithm may also be used in a nested manner with another preconditioner.

The SOR algorithm may include a Gauss-Seidel (Gauss-Seidel) algorithm, a symmetric Gauss-Seidel (symmetric Gauss-Seidel) algorithm, a symmetric successive over-relaxation (symmetric successive over-relaxation) algorithm, and the like. The ILU algorithm includes an ILU(0) algorithm, an ILU(1) algorithm, an ILU(k) algorithm, and the like.

The following briefly describes core points of the SOR algorithm and the ILU algorithm.

The core of the SOR algorithm is as follows: First, the coefficient matrix **A** of the sparse linear equation system is split into three matrices: a lower triangular matrix **L,** an upper triangular matrix **U,** and a diagonal matrix **D,** that is, **A=L+U+D.** In this way, the original sparse linear equation system is converted into **(L+U+D)x=b.** It can be learned that solving the sparse linear equation system includes solving a plurality of sparse triangular systems (the diagonal matrix **D** may be combined with the lower triangular matrix **L** or the upper triangular matrix **U** into a triangular matrix, or the diagonal matrix **D** may also be considered as a triangular matrix). Then, the sparse triangular system is solved based on different SOR algorithms.

The Gauss-Seidel algorithm is used as an example. An iteration formula of the Gauss-Seidel algorithm is (**L** + **D**)×x(*k* + l) = **b** - **U**×x(*k*), where x(*k*) is a solution vector obtained through a k^{th} iteration, x(*k*+1) is a solution vector obtained through a (k+1)^{th} iteration, and **L+D** is a lower triangular part of the coefficient matrix **A.**

The core of the ILU algorithm is as follows: First, the coefficient matrix **A** of the sparse linear equation system is decomposed into two matrices: a lower triangular matrix **L** and an upper triangular matrix **U,** that is, **A**=**L**×**U**. In this way, the original sparse linear equation system is converted into **LUx=b.** Then, it is assumed that **Ux=y,** and a process of solving **LUx=b** includes solving two sparse triangular systems: **Ly=b** and **Lx=y.**

### 4. Compressed sparse row (compressed sparse row, CSR) format

The CSR format is a sparse storage format for a sparse matrix. For example, the coefficient matrix **A** in the sparse linear equation system may be stored in the CSR format. Storing a matrix in the sparse storage format can save memory space.

It may be understood that, when a proportion of a non zero element (or referred to as a non-zero element) in the coefficient matrix **A** is very low, if the coefficient matrix **A** is stored in a form of a conventional two-dimensional array (a[n] [n]), a large amount of memory space is wasted. Therefore, for a sparse matrix, a sparse storage format is generally used, and the CSR format is a commonly used sparse storage format.

In the CSR format, three one-dimensional arrays represent the coefficient matrix **A.** The three one-dimensional arrays are respectively a, d, and c. The array a includes nnz elements, the array d also includes nnz elements, and the array c includes n+1 elements, where nnz represents a total quantity of non-zero elements in the coefficient matrix **A,** and n represents a quantity of rows in the coefficient matrix **A.** The array a is used to store values of all non-zero elements in the coefficient matrix **A,** the array d is used to store an index of a column in which each non-zero element is located in the coefficient matrix **A,** and the array c is used to store an index of a location, in the array a, of a first non-zero element in each row of the coefficient matrix **A** and the quantity of the non-zero elements in the coefficient matrix **A.**

a[k] is a k^{th} element in the array a, and a[k] represents a value of a k^{th} non-zero element in the coefficient matrix **A.** d[k] is a **k^{th}** element in the array d, and d[k] represents a column index of a k^{th} non-zero element in the coefficient matrix **A,** where k=0, 1, ..., nzz-1. c[t] is a t^{th} element in the array c, c[t] represents a location index, in the array a, of a first non-zero element in a t^{th} row of the coefficient matrix **A,** t=0, 1, ..., n-1, c[n] is an n^{th} element (namely, a last element) in the array c, and c[n] represents the total quantity of non-zero elements in the coefficient matrix **A.**

It should be noted that, in embodiments of this application, for an array, a matrix, and a vector, location indexes of elements in the array, the matrix, and the vector are all numbered starting from 0. For example, if the vector includes n elements, location indexes of the elements in the vector are 0 to n-1, and a k^{th} element in the vector is an element whose index number is k in the vector. Details are not described in the following embodiments one by one.

For example, for the following coefficient matrix **A:** $A = \left[\begin{matrix}1 & 0 & 2 & 0 \\ 0 & 3 & 0 & 0 \\ 0 & 0 & 6 & 0 \\ 0 & 7 & 0 & 9\end{matrix}\right]$

Three one-dimensional arrays corresponding to the coefficient matrix **A** are respectively:
a=[1, 2, 3, 6, 7, 9], where a[2]=3 indicates that a value of a second non-zero element in the coefficient matrix **A** is 3;
d=[0, 2, 1, 2, 1, 3], where d[5]=3 indicates that a column index of a fifth non-zero element in the coefficient matrix **A** is 3; and
c=[0, 2, 3, 4, 6], where c[2]=3 indicates that an index, in the array a, of a first non-zero element (namely, a non-zero element 6) in a second row of the coefficient matrix **A** is 3.

It can be learned from the foregoing descriptions of the CSR format that, O(n²) is required for storage space for a conventional two-dimensional array, and only O(n+2nnz) is required for the CSR format. When 2nnz is far less than n², storing the coefficient matrix A in the CSR format can significantly reduce memory usage.

### 5. Dependency relationship in the sparse triangular system

It can be learned from the descriptions of the foregoing embodiment that, in the HPC field, most computing problems are converted into problems of solving sparse triangular systems. In embodiments of this application, a task of solving a sparse triangular system involved in an application is referred to as a compute task of the application, and a process of solving a component in a solution vector of the sparse triangular system is defined as a subtask of solving the sparse triangular system. In other words, one compute task includes a plurality of subtasks. In a process of solving each component, solving of the component may depend on another component.

The following uses a simple sparse triangular system as an example for description. For the sparse triangular system in the following example: $\left[\begin{matrix}1 & 0 & 0 & 0 \\ 2 & 1 & 0 & 0 \\ 0 & 3 & 1 & 0 \\ 0 & 0 & 4 & 1\end{matrix}\right] \times \left[\begin{matrix}{x}_{0} \\ {x}_{1} \\ {x}_{2} \\ {x}_{3}\end{matrix}\right] = \left[\begin{matrix}{b}_{0} \\ {b}_{1} \\ {b}_{2} \\ {b}_{3}\end{matrix}\right]$

The sparse triangular system may also be represented as follows: $\left\{\begin{matrix}1 \times {x}_{0} = {b}_{0} \\ 2 \times {x}_{0} + 1 \times {x}_{1} = {b}_{1} \\ 3 \times {x}_{1} + 1 \times {x}_{2} = {b}_{2} \\ 4 \times {x}_{2} + 1 \times {x}_{3} = {b}_{3}\end{matrix}\right.$

With reference to a CSR format of a coefficient matrix of the sparse triangular system, a non-zero element array is a=[1, 2, 1, 3, 1, 4, 1]. In this case, the sparse triangular system may also be represented as follows: $\left\{\begin{matrix}a \left[0\right] \times {x}_{0} = {b}_{0} \\ a \left[1\right] \times {x}_{0} + a \left[2\right] \times {x}_{1} = {b}_{1} \\ a \left[3\right] \times {x}_{1} + a \left[4\right] \times {x}_{2} = {b}_{2} \\ a \left[5\right] \times {x}_{2} + a \left[6\right] \times {x}_{3} = {b}_{3}\end{matrix}\right.$

For a solution vector x in the sparse triangular system, four components: *x*₀, *x*₁, *x*₂, and *x*₃, of the solution vector respectively correspond to four subtasks: a subtask 0, a subtask 1, a subtask 2, and a subtask 3. FIG. 2 shows locations of non-zero elements in the coefficient matrix (a sparse lower triangular matrix). With reference to FIG. 2 and the sparse triangular system, the following conclusion may be directly obtained:

A dependency relationship between the subtask 0 (corresponding to the component *x*₀) and another subtask is that the subtask 0 does not depend on the another subtask;
a dependency relationship between the subtask 1 (corresponding to the component *x*₁) and another subtask is that the subtask 1 depends on the subtask 0;
a dependency relationship between the subtask 2 (corresponding to the component *x*₂) and another subtask is that the subtask 2 depends on the subtask 1; and
a dependency relationship between the subtask 3 (corresponding to the component *x*₃) and another subtask is that the subtask 3 depends on the subtask 2.

In conclusion, it can be learned that the following conclusion may be drawn: For a subtask i, an index number of a subtask on which the subtask i depends is equal to a column number of a non-zero element in an i^{th} row of the coefficient matrix.

For example, refer to the locations of the non-zero elements in the coefficient matrix in FIG. 2. For the subtask 0, if a column number of a non-zero element in a 0^{th} row of the coefficient matrix is 0, it is determined that the subtask 0 does not depend on the another subtask. For the subtask 1, if column numbers of non-zero elements in a 1^{st} row of the coefficient matrix are 0 and 1, it is determined that the subtask 1 depends on the subtask 0. For the subtask 2, if column numbers of non-zero elements in a 2^{nd} row of the coefficient matrix are 1 and 2, it is determined that the subtask 2 depends on the subtask 1. For the subtask 3, if column numbers of non-zero elements in a 3^{rd} row of the coefficient matrix are 2 and 3, it is determined that the subtask 3 depends on the subtask 2.

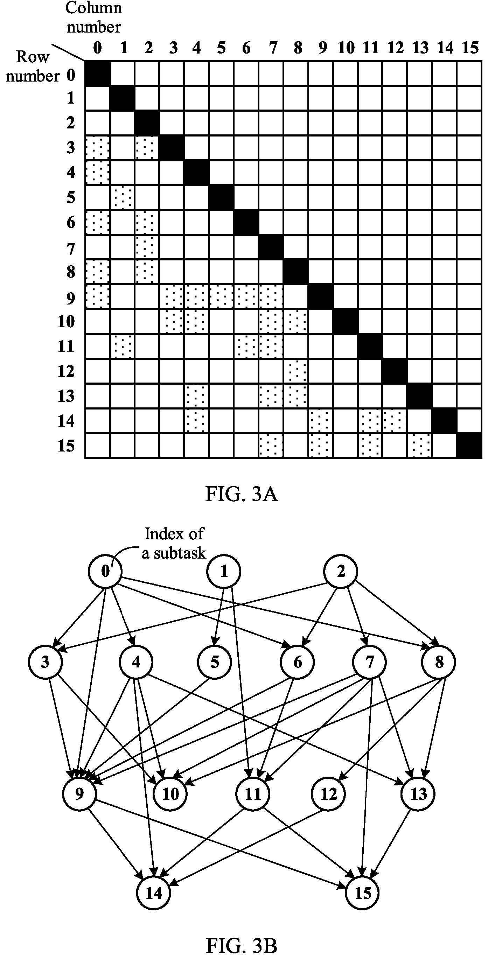

For example, refer FIG. 3A and FIG. 3B. FIG. 3A shows non-zero elements of a coefficient matrix (a lower triangular matrix) of a sparse triangular system. In the figure, all shaded locations are locations of the non-zero elements (black shadows indicate diagonal locations). It can be learned from FIG. 3A and FIG. 3B that the sparse triangular system includes 16 subtasks, and the coefficient matrix includes 16 rows. A dependency relationship between the 16 subtasks may be obtained through analysis based on FIG. 3A. FIG. 3B is a diagram of the dependency relationship between the 16 subtasks. The dependency relationship sequentially includes four layers, and an arrow indicates a dependency relationship between subtasks. For example, a subtask 0 and a subtask 2 point to a subtask 3 by using arrows, indicating that the subtask 3 depends on the subtask 0 and the subtask 2. As shown in FIG. 3B, none of the subtask 0, a subtask 1, and the subtask 2 depends on another subtask, that is, the subtask 0, the subtask 1, and the subtask 2 are independent of each other, and are located at a first layer of the dependency relationship diagram. The subtask 3, a subtask 4, a subtask 5, a subtask 6, a subtask 7, and a subtask 8 are independent of each other, and are located at a second layer of the dependency relationship diagram. A subtask 9, a subtask 10, a subtask 11, a subtask 12, and a subtask 13 are independent of each other, and are located at a third layer of the dependency relationship diagram. A subtask 14 and a subtask 15 are independent of each other, and are located at a fourth layer of the dependency relationship diagram. Each subtask at a subsequent layer depends on some subtasks at a previous layer (at least one previous layer).

In conclusion, the dependency relationship between the subtasks of the sparse triangular system may be obtained by analyzing the coefficient matrix of the sparse triangular system. Some of the plurality of subtasks are independent of each other, and some of the plurality of subtasks are mutually dependent. The subtasks may be solved in a multi-thread parallel manner based on the dependency relationship between the subtasks, to solve the sparse triangular system with high performance.

Currently, the coefficient matrix of the sparse triangular system is usually stored in a CSR format, and the coefficient matrix is not directly stored. In a process of solving the sparse triangular system, the dependency relationship between the subtasks is analyzed based on three arrays stored in the CSR format, and then threads are allocated to the subtasks based on the dependency relationship. Three one-dimensional arrays in the CSR format are respectively a, d, and c. The array a is used to store values of all non-zero elements in the coefficient matrix, the array d is used to store an index of a column in which each non-zero element is located in the coefficient matrix, and the array c is used to store an index of a location, in the array a, of a first non-zero element in each row of the coefficient matrix and the quantity of the non-zero elements in the coefficient matrix.

For example, three arrays of a coefficient matrix of a sparse triangular system stored in the CSR format are: a={1, 2, 1, 3, 1, 4, 1}, d={0, 0, 1, 1, 2, 2, 3}, and c={0, 1, 3, 5, 7}. It can be learned from a that the coefficient matrix has a dimension of 4×4, and a total quantity of non-zero elements is 7. Therefore, when the dependency relationship between the subtasks of the sparse triangular system is analyzed, analysis needs to be performed subtask by subtask.

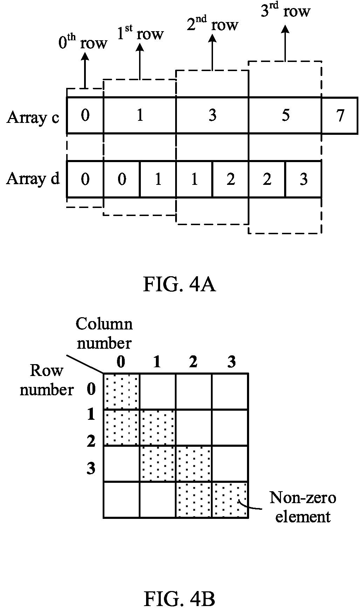

Refer to FIG. 4A, it can be learned, based on the array c, a location index, in the array a, of a first non-zero element in a 0^{th} row of the coefficient matrix being 0, and a location index, in the array a, of a first non-zero element in a 1^{st} row of the coefficient matrix being 1, that the 0^{th} row of the coefficient matrix includes one non-zero element, and a column index that is of the non-zero element and that is read from the array d is 0. Further, because the location index, in the array a, of the first non-zero element in the 1^{st} row of the coefficient matrix is 1, and a location index, in the array a, of a first non-zero element in a 2^{nd} row of the coefficient matrix is 3, it can be learned that the 1^{st} row of the coefficient matrix includes two non-zero elements, and column indexes that are of the non-zero elements and that are read from the array d are 0 and 1. Further, because the location index, in the array a, of the first non-zero element in the 2^{nd} row of the coefficient matrix is 3, and a location index, in the array a, of a first non-zero element in a 3^{rd} row of the coefficient matrix is 5, it can be learned that the 2^{nd} row of the coefficient matrix includes two non-zero elements, and column indexes that are of the non-zero elements and that are read from the array d are 1 and 2. Finally, the 3^{rd} row (a last row) of the coefficient matrix includes two non-zero elements, and column indexes that are of the non-zero elements and that are read from the array d are 2 and 3.

Refer to FIG. 4B. A location of a non-zero element in each row of the coefficient matrix may be obtained based on the foregoing analysis result, so that the dependency relationship between the subtasks of the sparse triangular system can be obtained. For example, the subtask 0 does not depend on another subtask, the subtask 1 depends on the subtask 0, the subtask 2 depends on the subtask 1, and the subtask 3 depends on the subtask 2.

In the foregoing process of analyzing the dependency relationship between the subtasks by using the arrays that are of the coefficient matrix of the sparse triangular matrix and that are stored in the CSR format, for each subtask of the coefficient matrix, when a subtask on which the subtask depends is analyzed, related elements need to be read from the array c and the array d. When the coefficient matrix has a high dimension, the dependency relationship is analyzed subtask by subtask. Consequently, efficiency of solving the sparse triangular system is low. In addition, in the process of analyzing the dependency relationship, a memory access amount is large, and a computing-to-memory access ratio is low (the computing-to-memory access ratio is used to reflect computing intensity of a program relative to memory access, and the computing-to-memory access ratio may be a ratio of a quantity of computing operations to a quantity of memory access operations). It should be understood that, a problem of solving the sparse triangular system is a problem of limited memory access. When the computing-to-memory access ratio is high, it indicates that performance of a solution method is better. Otherwise, when the computing-to-memory access ratio is low, performance is poor.

For a problem of low compute task processing efficiency in the conventional technology, an embodiment of this application provides a task processing method, used to process a grid compute task. A task processing apparatus obtains a grid compute task in an application, where the grid compute task includes a plurality of subtasks, and dependency relationships between the plurality of subtasks conform to a dependency rule. Then, the task processing apparatus analyzes a dependency relationship between a first subtask and another subtask in the plurality of subtasks, determines the dependency rule, analyzes a dependency relationship between other subtasks in the plurality of subtasks according to the dependency rule, allocates a compute resource to the plurality of subtasks based on the dependency relationships between the plurality of subtasks, and executes the plurality of subtasks. In the method, because the dependency relationship between the plurality of subtasks of the grid compute task conforms to the dependency rule, a dependency relationship between one subtask and another subtask in the plurality of subtasks is analyzed to obtain the dependency rule, and then the dependency relationship between the other subtasks is quickly obtained through analysis according to the dependency rule. Then, the compute resource is allocated to the plurality of subtasks based on the dependency relationships between the plurality of subtasks, and the plurality of subtasks are executed. In this way, the grid compute task can be quickly processed, and task processing efficiency can be improved.

Optionally, a hardware apparatus configured to perform the task processing method provided in embodiments of this application may be a device having processing and storage functions, for example, a compute device like a server or a desktop computer. For example, the method may be integrated into various applications that need to process grid compute tasks, for example, a third-party mathematical library, is applied to some solver frameworks in a form of a mathematical library, and is indirectly invoked by an upper-layer application. For another example, the method is invoked by a solver framework or an upper-layer application in a form of code.

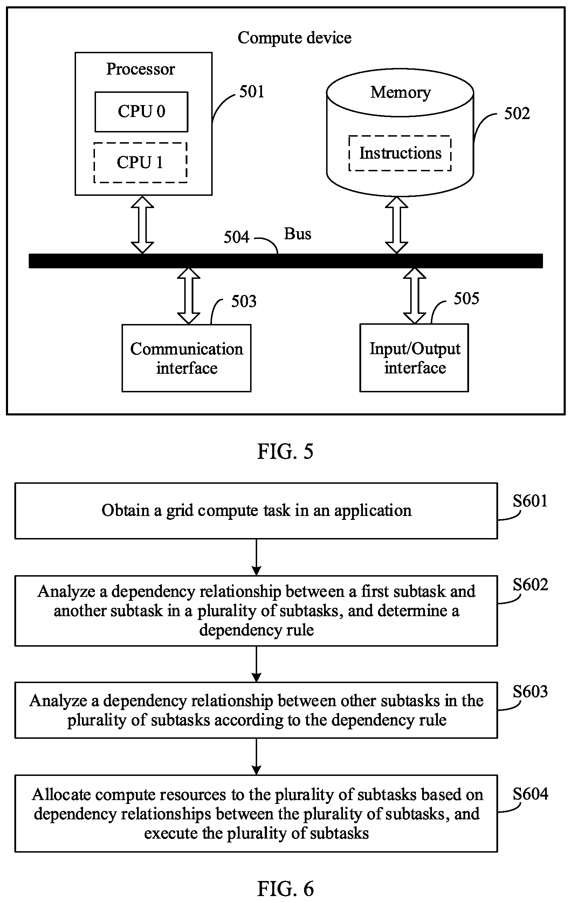

For example, the hardware apparatus for performing the task processing method is a compute device. FIG. 5 is a diagram of a hardware structure of a compute device according to an embodiment of this application. Various components shown in FIG. 5 may be implemented in hardware including one or more signal processing circuits and/or application-specific integrated circuits, software, or a combination of hardware and software.

As shown in FIG. 5, the compute device may include a processor 501, a memory 502, and a communication interface 503. The processor 501, the memory 502, and the communication interface 503 may be connected to each other via a bus 504, or may be connected to each other in another manner.

The processor 501 is a control center of the compute device. The processor 501 may be a general-purpose central processing unit (central processing unit, CPU), another general-purpose processor, or the like. The general-purpose processor may be a microprocessor, any conventional processor, or the like.

A controller in the processor 501 is a nerve center and a command center of the compute device. The controller may generate an operation control signal based on an instruction operation code and a time sequence signal, to complete control of instruction fetching and instruction execution. Optionally, a memory may be further disposed in the processor 501, and is configured to store instructions and data. For example, the processor 501 may include one or more CPUs, for example, a CPU 0 and a CPU 1 shown in FIG. 5.

The memory 502 includes but is not limited to a random access memory (random access memory, RAM), a read-only memory (read-only memory, ROM), an erasable programmable read-only memory (erasable programmable read-only memory, EPROM), a flash memory, an optical memory, a magnetic disk storage medium, another magnetic storage device, or any other medium that can carry or store expected program code in a form of an instruction or a data structure and that can be accessed by a computer. In this embodiment of this application, the memory 502 may store information such as computer instructions.

In a possible implementation, the memory 502 may be independent of the processor 501. The memory 502 may be connected to the processor 501 through the bus 504, and is configured to store data (for example, data in a CSR format), instructions, or program code. When invoking and executing the instructions or the program code stored in the memory 502, the processor 501 can implement related steps in the method provided in embodiments of this application.

In another possible implementation, the memory 502 may alternatively be integrated with the processor 501.

The communication interface 503 may be a transceiver module, and is configured to communicate with another device or a communication network (for example, communicate with a log management platform or a node information processing platform shown in FIG. 5), for example, communicate with the Ethernet, a RAN, or a wireless local area network (wireless local area network, WLAN). The communication interface 503 may receive instructions, messages, or data. The transceiver module may be an apparatus, for example, a transceiver or a transceiver machine. Optionally, the communication interface 503 may be a transceiver circuit located in the processor 501, and is configured to implement signal inputting and signal outputting of the processor. The communication interface 503 may be a wired interface (port), for example, a fiber distributed data interface (fiber distributed data interface, FDDI) or a gigabit ethernet (gigabit ethernet, GE) interface, or the communication interface 503 may be a wireless interface.

The bus 504 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. The bus may alternatively be classified into a serial bus or a parallel bus. For ease of representation, only one bold line is used for representation in FIG. 5, but this does not mean that there is only one bus or only one type of bus.

Optionally, the compute device in embodiments of this application may further include an input/output interface 505. The input/output interface 505 is configured to: connect to an input device, and receive information (for example, a coefficient matrix, a right-end vector, and template information of a structured grid) entered by a user through the input device. The input device includes but is not limited to a keyboard, a touchscreen, a microphone, and the like. The input/output interface 505 is further configured to: connect to an output device, and output a processing result of the processor.

It should be noted that the compute device shown in FIG. 5 is merely an example of a compute device. The compute device may have more or fewer components than those shown in FIG. 5, or a combination of two or more components, or an arrangement of different components.

With reference to the foregoing content, the following describes in detail the task processing method provided in embodiments of this application. As shown in FIG. 6, the method includes S601 to S604.

S601: Obtain a grid compute task in an application.

The grid compute task includes a plurality of subtasks, and dependency relationships between the plurality of subtasks conform to a dependency rule.

In this embodiment of this application, a grid of the grid compute task is a structured grid, and a plurality of vertices of the structured grid are in a one-to-one correspondence with the plurality of subtasks of the grid compute task. It should be understood that, on the basis of the structural characteristics of the structured grid described in the foregoing embodiments, for any point (a vertex of a grid cell) in the structured grid of the grid compute task, which is referred to as a target point, the target point has one or more association points, and the association point of the target point is a point that has an association relationship with the target point. In this embodiment of this application, the target point and the association points of the target point may form a point association group.

It should be noted that, when points of the structured grid other than a point on a boundary surface of the structured grid are used as target points, all the target points have a same quantity of association points, and location relationships between the association points and the target points are also the same.

Because the plurality of vertices of the structured grid are in a one-to-one correspondence with the plurality of subtasks of the grid compute task, there is also a dependency relationship between the plurality of subtasks. The dependency relationship between the subtasks may be obtained based on a location relationship between points. For example, for a subtask corresponding to the target point, a subtask on which the subtask depends is a subtask corresponding to an association point of the target point, and for any one of the plurality of subtasks, a subtask on which the subtask depends may be determined based on the same location relationship. It can be learned that, for the plurality of subtasks of the grid compute task, the dependency relationship between the plurality of subtasks conforms to the dependency rule, and the dependency rule may be understood as the foregoing location relationship between the target point and the association points. The dependency rule may also be referred to as a dependency relationship template.

If the grid compute task is a task of solving an equation (that is, solving a system of equations) through matrix multiplication, a total quantity of points in a point association group in the structured grid of the grid compute task is equal to a total quantity of non-zero elements in a target row (the target row is a row corresponding to the target point) of a coefficient matrix of the system of equations.

Optionally, the structured grid includes different templates, and quantities and locations of association points of target points in structured grids of different templates are different. Correspondingly, in the coefficient matrix of the system of equations, quantities of non-zero elements in rows of the coefficient matrix are different.

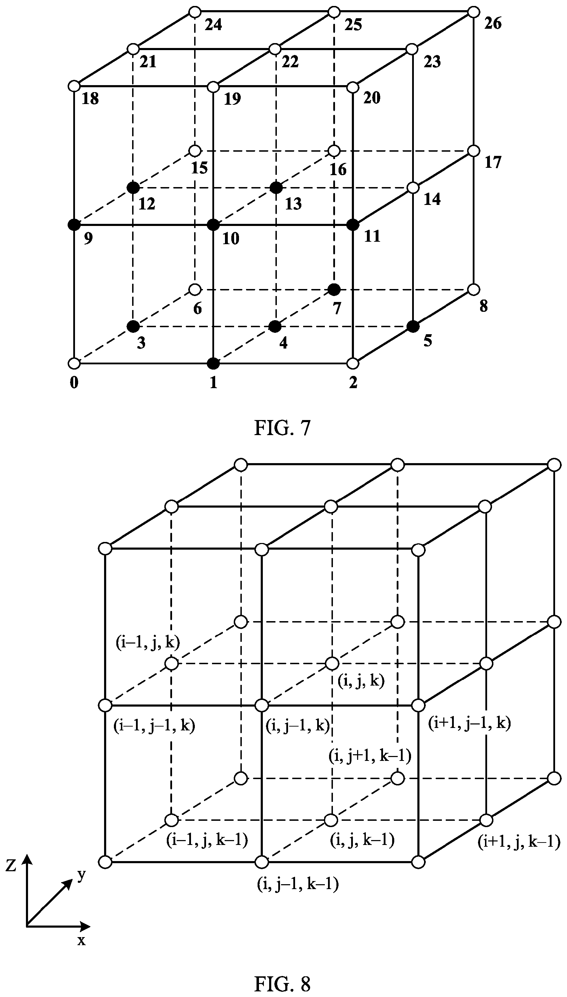

For example, if the grid compute task is a task of solving a sparse linear equation system Ax=b, and if a size of the coefficient matrix A is 27×27, a size of the solution vector **x** is 27×1, and a size of the right-end vector b is 27×1. For example, the structured grid of the sparse linear equation is a structured grid of a 3D19 template. A size of the structured grid is 3×3×3, that is, the structured grid is a cube, and includes two grid cells in each of three directions (namely, an x direction, a y direction, and a z direction), and each grid cell is also a cube. FIG. 7 shows a structured grid of a sparse linear equation system. The structured grid includes eight grid cells and 27 vertices. One target point (a point that is not on a boundary surface) in the structured grid has 18 association points. Therefore, correspondingly, in the sparse linear equation system, a corresponding row in a coefficient matrix of the sparse linear equation system has 19 non-zero elements.

For ease of description, as shown in FIG. 7, the 27 vertices in the structured grid are numbered, and numbers are 0 to 26. The 27 points may be respectively denoted as a point 0, a point 1, ..., and a point 26. The point 13 in the figure is used as an example. A point association group in which the point 13 is used as a target point includes 19 points, and numbers of the points are {0, 1, 3, 4, 5, 9, 10, 11, 12, 13, 14, 15, 16, 17, 19, 21, 22, 23, 25}.

For the sparse linear equation system, after the coefficient matrix is split or decomposed into a lower triangular matrix and an upper triangular matrix, solving the sparse linear equation system includes solving a sparse lower triangular system and solving a sparse upper triangular system. For a 13^{th} row in the coefficient matrix of the sparse linear equation system, a part of the 18 points other than the point 13 in the point association group correspond to association points of the point 13 (or referred to as points on which the point 13 depends) in the sparse lower triangular system, and the other part of the 18 points correspond to association points of the point 13 (or referred to as points on which the point 13 depends) in the sparse upper triangular system. Still refer to FIG. 1. For the sparse lower triangular system corresponding to the sparse linear equation system, the point 13 in the structured grid depends on nine points, and numbers of the nine points are {1, 3, 4, 5, 7, 9, 10, 11, 12}. For the sparse upper triangular system corresponding to the sparse linear equation system, the point 13 in the structured grid depends on nine points, and numbers of the nine points are {14, 15, 16, 17, 19, 21, 22, 23, 25}.

In an implementation, the grid compute task in this embodiment of this application is a task of solving a triangular system through matrix multiplication, that is, solving a triangular system. The triangular systems may be a sparse triangular systems, and a component of a solution vector for solving a triangular system is referred to as a subtask of the triangular system . For ease of description, in the following embodiments, an example in which the grid compute task is solving the sparse triangular system is used for description.

If the grid compute task is solving the sparse triangular system, obtaining the grid compute task of the application includes: obtaining structured grid information of the sparse triangular system and a coefficient matrix of the sparse triangular system.

In this embodiment of this application, the sparse triangular system may be represented as **Wx=b,** where **W** is the coefficient matrix, **W** is a triangular matrix, and **W** ∈ *n*×*n* ; **x** is a solution vector; and **x** ∈ *n*×1; and **b** is a right-end vector, and **b** ∈ *n*×1. A process of solving a component of the solution vector **x** is used as a subtask of solving the sparse triangular system. It can be learned that the sparse triangular system includes n subtasks, and a process of solving the sparse triangular system is solving the n subtasks.

Optionally, the coefficient matrix **W** may be an upper triangular matrix or a lower triangular matrix. This is not limited in embodiments of this application.

Optionally, the structured grid information may include template information of the structured grid, size information of the structured grid, and the like.

The structured grid information indicates distribution of the plurality of subtasks of the grid compute task in the structured grid of the grid compute task. For a structured grid of the sparse triangular system, one vertex in the structured grid corresponds to one subtask. Specifically, if one vertex in the structured grid corresponds to one subtask, an index of a vertex in the structured grid is the same as a row index of a corresponding component of the solution vector. For example, a vertex 0 in the structured grid corresponds to a component 0 (namely, a subtask 0) of the solution vector.

In this embodiment of this application, in a coordinate system of the structured grid of the sparse triangular system, a relationship between coordinates of each vertex and an index of the vertex is defined. For example, an index number of a subtask corresponding to a component ***xₚ*** of the solution vector **x** of the sparse triangular system is p, and there is a correspondence between the index number p of the subtask and coordinates (i, j, k) of a vertex of the structured grid, where p=0, 2, ..., n-1. In this way, a point in the structured grid can correspond to a subtask based on a correspondence between an index of the subtask and coordinates of a vertex of the structured grid, and the dependency relationship between the plurality of subtasks of the grid compute task can be quickly obtained through analysis by analyzing a dependency relationship between points.

If the structured grid is a three-dimensional structured grid, as shown in FIG. 8, the structured grid is a cube (including six faces: a front face, a rear face, a left face, a right face, an upper face, and a lower face). For the structured grid of the cube, a coordinate system of the structured grid is defined. A horizontal rightward direction is defined as a positive direction of an *x* axis, a vertical upward direction is defined as a positive direction of a z axis, and a direction that is perpendicular to the *x* axis and the z axis and that points to the rear face of the cube is defined as a positive direction of a y axis.

In an implementation, the size information of the structured grid includes: a quantity *nₓ* of grid cells of the structured grid in an x-axis direction, a quantity *n_{y}* of grid cells of the structured grid in the y-axis direction, and a quantity *n_{z}* of grid cells of the structured grid in the z-axis direction. When the coefficient matrix of the sparse triangular system is a lower triangular matrix, the relationship between the index number p of the subtask and the coordinates (i, j, k) of the vertex of the structured grid satisfies: $p = i + j \times {n}_{x} + k \times {n}_{x} \times {n}_{y}$

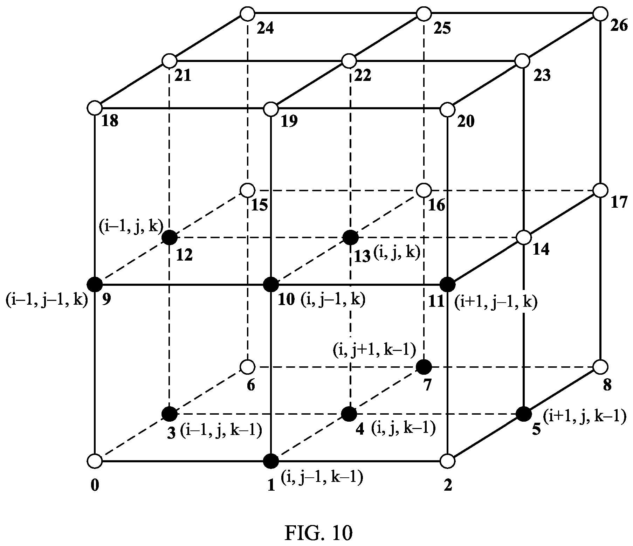

For example, for the sparse triangular system **Wx=b,** if a size of the coefficient matrix **W** is 27×27, a size of the solution vector **x** is 27×1, and a dimension of the right-end vector **b** is 27×1. The structured grid of the 3D19 template is still used as an example. The structured grid of the sparse triangular system is the structured grid shown in FIG. 7. A relationship between coordinates of a point in the structured grid and an index of a subtask is shown in FIG. 10 (FIG. 10 shows coordinates of some points). According to the foregoing calculation formula, an index of a subtask corresponding to each point may be calculated. For example, for a vertex (1, 1, 1) in the structured grid, an index 13 of a subtask corresponding to the vertex is calculated according to the calculation formula.

S602: Analyze a dependency relationship between a first subtask and another subtask in the plurality of subtasks, and determine the dependency rule.

In this embodiment of this application, analyzing the dependency relationship between the first subtask and the another subtask in the plurality of subtasks is analyzing distribution, in the structured grid, of the plurality of subtasks indicated by structured grid information, and determining a subtask, in other subtasks, on which the first subtask depends.

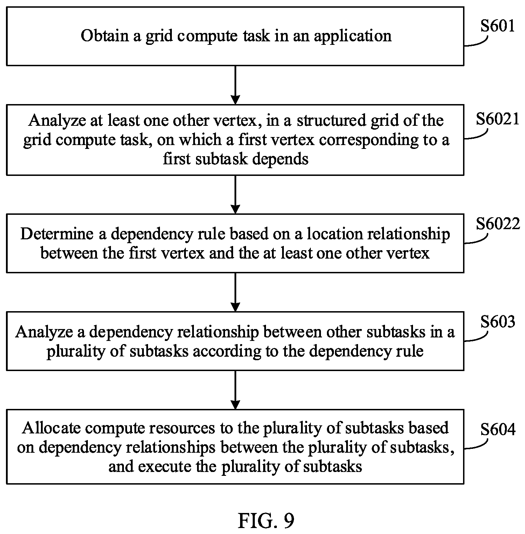

In an implementation, with reference to FIG. 6, as shown in FIG. 9, S602 is implemented by using S6021 and S6022.

S6021: Analyze at least one other vertex, in the structured grid of the grid compute task, on which a first vertex corresponding to the first subtask depends.

In this embodiment of this application, for any two vertices in the structured grid, for example, the first vertex and a second vertex, in the structured grid, a location relationship between the at least one vertex on which the first vertex depends and the first vertex is a first location relationship, and a location relationship between at least one vertex on which the second vertex depends and the second vertex is a second location relationship. It can be learned from a known feature of the structured grid that the first location relationship is the same as the second location relationship.

It may be understood that when the grid compute task is determined, an association relationship between the points in the structured grid is also determined. For example, when the coefficient matrix of the sparse triangular system is determined, the association relationship between the points in the structured grid of the sparse triangular system is known.

Still refer to FIG. 10. It is assumed that the first vertex corresponding to the first task is the point 13, and the point 13 depends on nine points: the point 1, the point 3, the point 4, the point 5, the point 7, the point 9, the point 10, the point 11, and the point 12. In this case, it can be learned that a subtask 13 depends on a subtask 1, a subtask 3, a subtask 4, a subtask 5, a subtask 7, a subtask 9, a subtask 10, a subtask 11, and a subtask 12. According to the conclusion of the dependency relationship between the plurality of subtasks of the sparse triangular system described in the foregoing embodiment: for the subtask i, the index number of the subtask on which the subtask i depends is equal to the column number of the non-zero element in the i^{th} row in the coefficient matrix, column indexes of non-zero elements in a 13^{th} row in the coefficient matrix are 1, 3, 4, 5, 7, 9, 10, 11, 12, and 13.

For ease of description, the positive direction of the *x* axis of the coordinate system of the structured grid is referred to as a right side for short, a negative direction of the *x* axis is referred to as a left side for short, the positive direction of the y axis is referred to as a rear side for short, a negative direction of the y axis is referred to as a front side for short, the positive direction of the z axis is referred to as an upper side for short, and a negative direction of the z axis is referred to as a lower side for short. In the structured grid of the 3D19 template, a right point depends on a left point, an upper point depends on a lower point, and a rear point depends on a front point.

In this case, for the nine points on which the point 13 depends, the point 1 is located on a lower front side of the point 13. To be specific, the point 13 is used as a start point. Movement is performed by one unit (which is a side length of a grid cell of a square) along the front side, and then movement is performed by one unit along the lower side. Similarly, a location relationship between the point 13 and each of the point 3, the point 4, the point 5, the point 7, the point 9, the point 10, the point 11, and the point 12 may be obtained through analysis. The location relationships are shown in Table 1 below.

**Table 1**

| Point on which the point 13 depends | Location relationship with the point 13 |
|---|---|
| Point 1 | Lower front side |
| Point 3 | Lower left side |
| Point 4 | Lower side |
| Point 5 | Lower right side |
| Point 7 | Lower rear side |
| Point 9 | Left front side |
| Point 10 | Front side |
| Point 11 | Right front side |
| Point 12 | Left side |

S6022: Determine the dependency rule based on the location relationship between the first vertex and the at least one other vertex.

The dependency relationship between the first subtask and the another subtask may be learned based on the location relationship between the first vertex and the at least one other vertex shown in Table 1. The dependency relationship between the subtasks is determined based on the location relationship between the points. It may be understood that the location relationship may be considered as a dependency rule that the subtask complies with.

S603: Analyze a dependency relationship between other subtasks in the plurality of subtasks according to the dependency rule.

Based on the descriptions of the foregoing embodiments and the location relationship shown in Table 1, a point on which each point in the structured grid depends may be determined, that is, a subtask on which each subtask in the sparse triangular system depends is determined. It should be noted that, for the point on the boundary surface of the structured grid, a quantity of points on which the point depends is less than 9. For the sparse triangular system, Table 2 shows the subtask on which each subtask depends. A subtask in Table 2 is a vertex in the structured grid. One or more points on which a point i depends are determined based on the point i corresponding to the subtask i and the location relationship obtained through analysis, so that one or more subtasks on which the subtask i depends can be determined.

**Table 2**

| Subtask | Depended subtask | | | | | | | | |
|---|---|---|---|---|---|---|---|---|---|
| | Lower front side | Lower left side | Lower side | Lower right side | Lower rear side | Left-front | Front side | Right front side | Left side |
| 0 | / | / | / | / | / | / | / | / | / |
| 1 | / | / | / | / | / | / | / | / | 0 |
| 2 | / | / | / | / | / | / | / | / | 1 |
| 3 | / | / | / | / | / | / | 0 | 1 | / |
| 4 | / | / | / | / | / | 0 | 1 | 2 | 3 |
| 5 | / | / | / | / | / | 1 | 2 | / | 4 |
| 6 | / | / | / | / | / | / | 3 | 4 | / |
| 7 | / | / | / | / | / | 3 | 4 | 5 | 6 |
| 8 | / | / | / | / | / | 4 | 5 | / | 7 |
| 9 | / | / | 0 | 1 | 3 | / | / | / | / |
| 10 | / | 0 | 1 | 2 | 4 | / | / | / | 9 |
| 11 | / | 1 | 2 | / | 5 | / | / | / | 10 |
| 12 | 0 | / | 3 | 4 | 6 | / | 9 | 10 | / |
| 13 | 1 | 3 | 4 | 5 | 7 | 9 | 10 | 11 | 12 |
| 14 | 2 | 4 | 5 | / | 8 | 10 | 11 | / | 13 |
| 15 | 3 | / | 6 | 7 | / | / | 12 | 13 | / |
| 16 | 4 | 6 | 7 | 8 | / | 12 | 13 | 14 | 15 |
| 17 | 5 | 7 | 8 | / | / | 13 | 14 | / | 16 |
| 18 | / | / | 9 | 10 | 12 | / | / | / | / |
| 19 | / | 9 | 10 | 11 | 13 | / | / | / | 18 |
| 20 | / | 10 | 11 | / | 14 | / | / | / | 19 |
| 21 | 9 | / | 12 | 13 | 15 | / | 18 | 19 | / |
| 22 | 10 | 12 | 13 | 14 | 16 | 18 | 19 | 20 | 21 |
| 23 | 11 | 13 | 14 | / | 17 | 19 | 20 | / | 22 |
| 24 | 12 | / | 15 | 16 | / | / | 21 | 22 | / |
| 25 | 13 | 15 | 16 | 17 | / | 21 | 22 | 23 | 24 |
| 26 | 14 | 16 | 17 | / | / | 22 | 23 | / | 25 |

After the dependency relationship between the subtasks is obtained through analysis, subtasks that are in the plurality of subtasks and that are independent of each other, subtasks that are in the plurality of subtasks and that depend on each other, and a quantity of layers of the dependency relationship may be learned.

In this embodiment of this application, the dependency rule that the subtasks comply with is analyzed based on a structural feature of the structured grid, namely, the distribution of the plurality of subtasks, to obtain the dependency relationship between the plurality of subtasks. For the grid compute task of solving the sparse triangular system, there is no need to analyze information about the coefficient matrix of the sparse triangular system one by one to obtain the dependency relationship. Therefore, it can be learned that a method for analyzing the dependency relationship between the subtasks based on the structured grid in this application can be used to more quickly obtain the dependency relationship between the plurality of subtasks through analysis.

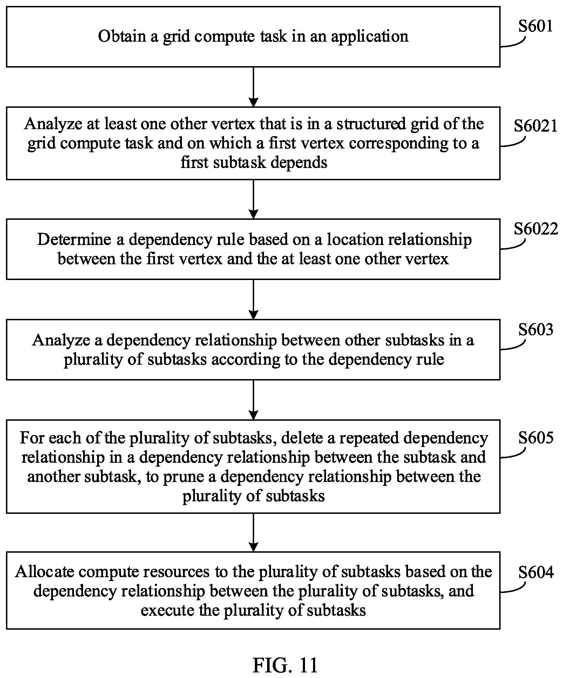

Optionally, with reference to FIG. 9, as shown in FIG. 11, after S603, the method provided in this embodiment of this application further includes S605.

S605: For each of the plurality of subtasks, delete a duplicated dependency relationship from dependency relationships between the subtask and other subtasks, to prune the dependency relationships between the plurality of subtasks.

In this embodiment of this application, the dependency relationship between the subtasks may be redundant. For example, in at least one subtask on which a subtask depends, one or more subtasks depend on another subtask in the at least one subtask. For example, for the foregoing subtask 13, the subtask 13 depends on the subtask 1, the subtask 3, the subtask 4, the subtask 5, the subtask 7, the subtask 9, the subtask 10, the subtask 11, and the subtask 12, and the subtask 5 further depends on the subtask 1 and the subtask 4. Therefore, there is a duplicated dependency relationship, namely, a redundant dependency relationship. Pruning the redundant dependency relationship can simplify the dependency relationship, and facilitate subsequent resource allocation.

Optionally, deleting the duplicated dependency relationship in the dependency relationships between the subtask and the other subtasks is specifically: for each of the plurality of subtasks, deleting a redundantly depended subtask in the at least one subtask on which each subtask depends. For example, in the subtasks on which the subtask 13 depends, at least the subtask 1 and the subtask 4 are redundantly depended on.

In an implementation, for each of the plurality of subtasks, a method for deleting the redundantly depended subtask in the at least one subtask on which each subtask depends further includes Step 1 and Step 2.

Step 1: In the structured grid, for a vertex corresponding to each subtask, determine a location relationship between a redundantly depended vertex in at least one vertex on which the vertex depends and the vertex.

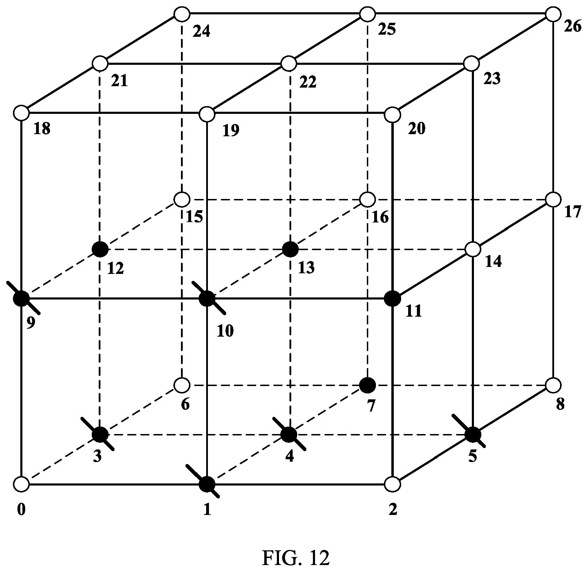

The foregoing example is still used for description. As shown in FIG. 12, according to a rule of the dependency relationship between the points in the structured grid of the 3D19 template, for the subtask 13, namely, the point 13 in the structured grid, the point 1, the point 3, the point 4, the point 5, the point 9, and the point 10 in the points on which the point 13 depends are redundantly depended on. Therefore, a corresponding subtask in the subtasks on which the subtask 13 depends needs to be deleted, so that the dependency relationship of the subtask 13 is pruned to be that the point 13 depends on the point 7, the point 11, and the point 12. With reference to Table 2 and FIG. 12, a location relationship between each of the redundantly depended points in the points on which the point 13 depends and the point 13 is: on the lower front side, the lower left side, the lower side, the lower right side, the left front side, or the front side of the point 13.

Step 2: Determine the redundantly depended subtask in the at least one subtask on which each subtask depends based on the location relationship, and delete the redundantly depended subtask.

In this embodiment of this application, in the structured grid, for each of the vertices in the structured grid, the redundantly depended vertex in the at least one vertex on which the vertex depends and the vertex has the same location relationship. Therefore, the redundantly depended subtask in the at least one subtask on which each subtask depends may be determined based on the location relationship determined in Step 1, and the redundantly depended subtask is deleted, to obtain at least one subtask on which each subtask finally depends. Table 3 shows an example of dependency relationships obtained after the dependency relationships between the subtasks in Table 2 are pruned.

**Table 3**

| Subtask | Depended subtask | | |
|---|---|---|---|
| | Lower rear side | Right front side | Left side |
| 0 | / | / | / |
| 1 | / | / | 0 |
| 2 | / | / | 1 |
| 3 | / | 1 | / |
| 4 | / | 2 | 3 |
| 5 | / | / | 4 |
| 6 | / | 4 | / |
| 7 | / | 5 | 6 |
| 8 | / | / | 7 |
| 9 | 3 | / | / |
| 10 | 4 | / | 9 |
| 11 | 5 | / | 10 |
| 12 | 6 | 10 | / |
| 13 | 7 | 11 | 12 |
| 14 | 8 | / | 13 |
| 15 | / | 13 | / |
| 16 | / | 14 | 15 |
| 17 | / | / | 16 |
| 18 | 12 | / | / |
| 19 | 13 | / | 18 |
| 20 | 14 | / | 19 |
| 21 | 15 | 19 | / |
| 22 | 16 | 20 | 21 |
| 23 | 17 | / | 22 |
| 24 | / | 22 | / |
| 25 | / | 23 | 24 |
| 26 | / | / | 25 |

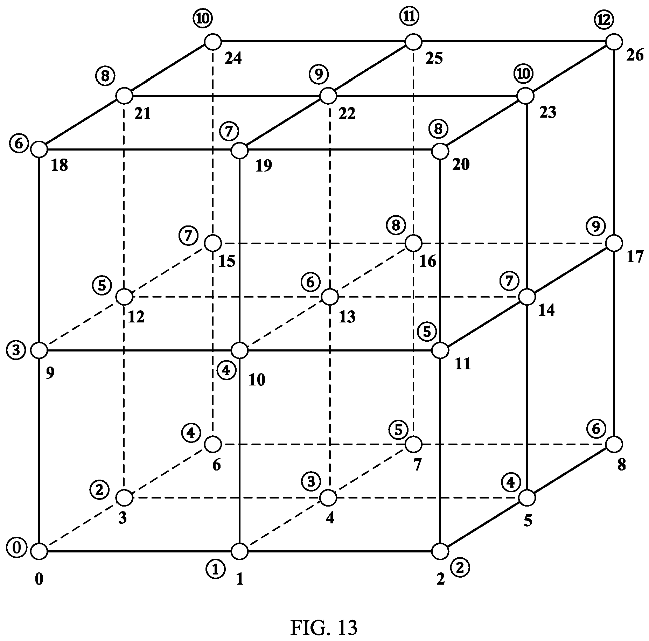

It may be learned, through analysis based on the dependency relationship obtained through pruning shown in Table 3, that the dependency relationship between the subtasks includes 13 layers, which are denoted as ① to ⑫, and subtasks included in each layer are shown in FIG. 13.

In the process of pruning the dependency relationship between the subtasks, based on the structural feature that, for each of the vertices in the structured grid, the redundantly depended vertex in the at least one vertex on which the vertex depends and the vertex has the same location relationship, the redundantly depended vertex in the vertices on which each vertex depends can be quickly determined based on the location relationship after the location relationship is learned, to more quickly prune the dependency relationship.

S604: Allocate compute resources to the plurality of subtasks based on the dependency relationships between the plurality of subtasks, and execute the plurality of subtasks.

Allocating the compute resources allocated to the plurality of subtasks means allocating the plurality of subtasks to different threads for running, and the different threads process the subtasks in parallel.

In the process of executing the subtasks, it is determined, based on the relationship between the subtasks obtained through analysis, that an execution sequence of the plurality of subtasks is as follows: Subtasks at a same layer are independent of each other and can be run in parallel, subtasks at different layers have a dependency relationship, and the subtasks need to be run layer by layer.

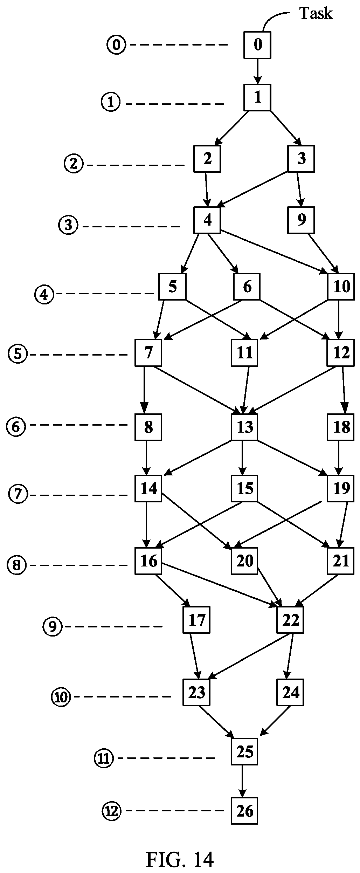

For ease of understanding, FIG. 14 intuitively shows the dependency relationship between the plurality of subtasks. For example, for 27 subtasks shown in FIG. 14, subtasks 0, 1, 2, 4, 5, 6, 7, 11, 8, 13, 14, 15, 16, 20, 17, 23, 25, and 26 may be allocated to a thread 1, and subtasks 3, 9, 10, 12, 18, 19, 21, 22, and 24 may be allocated to a thread 2. In this way, the thread 1 and the thread 2 may process the subtasks in parallel, and the subtasks are processed in serial in a single thread.

When the grid compute task is solving the sparse triangular system, executing the plurality of subtasks is specifically: A plurality of threads execute the plurality of subtasks of the sparse triangular system in the execution sequence of the plurality of subtasks by using the coefficient matrix of the sparse triangular system as an input, to obtain the solution vector of the sparse triangular system.

For the sparse triangular system Wx=b, the coefficient matrix W and the right-end vector b are used as known input information, and the process of executing the plurality of subtasks of the sparse triangular system in the execution sequence of the plurality of subtasks to obtain the solution vector of the sparse triangular system specifically includes: The threads process the subtasks in parallel, and the subtasks are processed in serial in a same thread. The coefficient matrix W may be obtained based on three one-dimensional arrays in a CSR format of the coefficient matrix.

It should be understood that, when executing a corresponding subtask, a thread obtains, through solving, a corresponding component in the solution vector of the triangular system based on another subtask on which the subtask depends, a non-zero element in a row corresponding to the subtask in the coefficient matrix, and a corresponding component in the right-end vector. For example, refer to a diagram of dependency relationships shown in FIG. 14. When the thread executes the subtask 13, data required for executing the subtask 13 is a first component, a third component, a fourth component, a fifth component, a seventh component, a ninth component, a tenth component, an eleventh component, and a twelfth component in the solution vector and b₁₃ in the right-end vector.

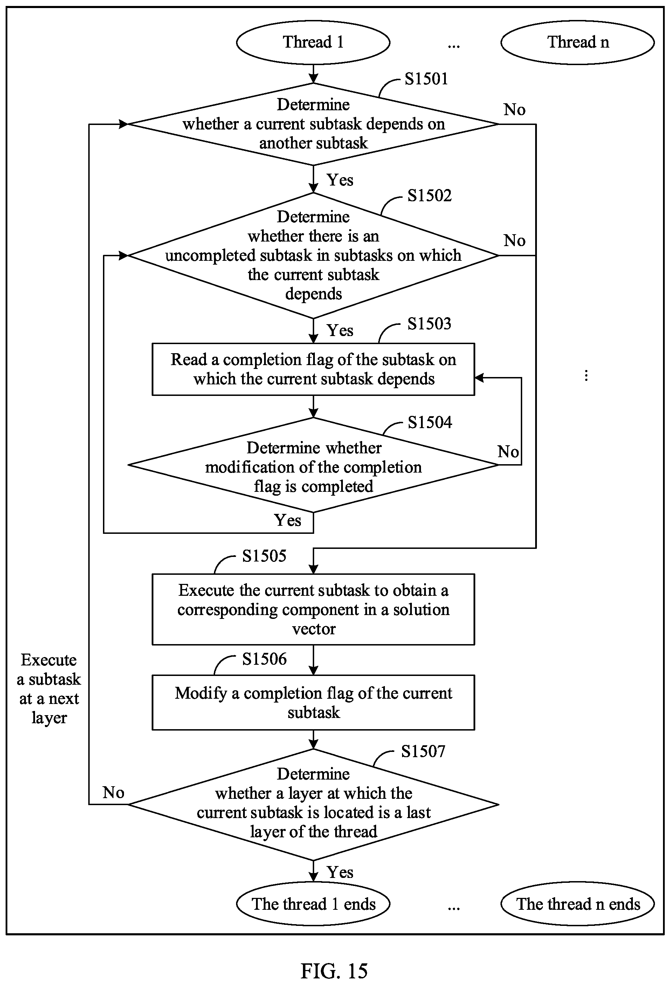

The following describes a subtask processing process by using one thread as an example. As shown in FIG. 15, a process in which one thread (the thread 1) executes a subtask includes the following S1501 to S1507.

S1501: Determine whether a current subtask depends on another subtask.

When executing the current subtask, the thread 1 first determines, based on a dependency relationship between subtasks obtained through analysis, whether the current subtask depends on the another subtask. If the current subtask depends on the another subtask, S1502 is performed. If the current subtask does not depend on the another subtask, S1505 and subsequent steps are performed.

For example, if the current subtask is the subtask 0 in FIG. 14, and it is determined, based on the dependency relationship, that the subtask 0 does not depend on another subtask, S1505 is performed to execute the subtask, to obtain a corresponding component *x*₀ in the solution vector. For another example, if the current subtask is the subtask 4 in FIG. 14, it can be learned that the subtask 4 depends on the subtask 2 and the subtask 3. In this case, S1502 continues to be performed.

S1502: Determine whether there is an uncompleted subtask in subtasks on which the current subtask depends.

Because the current subtask depends on the another subtask, data obtained through execution of the another subtask ends needs to be depended on when the subtask is executed. Therefore, it is necessary to determine whether the subtask on which the current subtask depends is executed. If there is no uncompleted subtask in the subtasks on which the current subtask depends (that is, all the subtasks on which the current subtask depends have been executed), S1505 is performed to execute the current subtask. If there is an uncompleted subtask in the subtasks on which the current subtask depends, S1503 and S1504 are performed.

Optionally, a method for determining whether the subtask on which the current subtask depends is completed is that the thread 1 continuously reads a subtask completion flag of the subtask on which the current subtask depends, where the subtask completion flag indicates whether the subtask is completed.

S1503: Read the completion flag of the subtask on which the current subtask depends.

For example, the completion flag of the subtask may be 0 or 1, where 1 indicates that the subtask is completed, and 0 indicates that the subtask is not completed.

S1504: Determine, based on the read completion flag of the subtask, whether the dependent subtask is completed.

If the completion flag of the subtask on which the current subtask depends indicates that the subtask is not completed, the thread 1 returns to S1503, and continues to wait and read the completion flag of the subtask. If the completion flag of the subtask on which the current subtask depends indicates that the subtask is completed, it is determined that the subtask on which the current subtask depends has been executed.

It should be noted that, the thread 1 needs to determine whether each of the subtasks on which the current subtask depends is executed, until there is no uncompleted subtask in all the subtasks (that is, all the subtasks are executed) on which the current subtask depends, and then performs S1505 to solve a component in the solution vector corresponding to the subtask.

S1505: Execute the current subtask to obtain a corresponding component in the solution vector.

S1506: Modify a completion flag of the current subtask.

After executing a subtask, the thread 1 needs to modify a completion flag of the subtask, so that when another subtask is subsequently executed, if the another subtask depends on the subtask, the thread 1 may determine, based on the completion flag of the subtask, whether the subtask is executed (namely, the process described in S1502).

After the thread 1 completes executing the current subtask, the thread 1 continues to perform S1507 to determine whether the thread 1 ends.

S1507: Determine whether a layer at which the current subtask is located is a last layer of the thread.

It may be understood that, in this embodiment of this application, the dependency relationship between the subtasks is hierarchical, and the thread executes the subtasks in a layer sequence. If the layer at which the current subtask is located is the last layer of the dependency relationship, the thread 1 ends running. If the layer at which the current subtask is located is not the last layer of the thread, the thread 1 continues to cyclically perform S1501 to S1507 to execute a subtask at a next layer.

Each thread executes a corresponding subtask based on the foregoing processing process. After all the threads complete execution, the solution vector of the sparse triangular system may be obtained.

Generally, when the coefficient matrix is stored in a memory, non-zero elements of rows are sequentially stored in a sequence of the rows of the coefficient matrix. When running a subtask, the thread needs to read, from the memory, a non-zero element in a row corresponding to the subtask in the coefficient matrix (for example, when executing the subtask 13, the thread needs to read the non-zero elements in the 13^{th} row of the coefficient matrix). However, for a thread, sequence numbers of subtasks executed by the thread may be inconsecutive. Correspondingly, the thread needs to read, in a jumping manner from the memory, a non-zero element in a corresponding row of the coefficient matrix. Consequently, the thread cannot continuously access the memory (that is, memory access is discontinuous) in a process of executing the subtask, and a waste of memory bandwidth is caused.

The foregoing example shown in FIG. 14 is still used as an example. The thread 1 sequentially executes the subtasks in a sequence of subtask serial numbers 0, 1, 2, 4, 5, 6, 7, 11, 8, 13, 14, 15, 16, 20, 17, 23, 25, and 26. It can be learned that, when executing the subtask 0, the thread 1 reads a non-zero element in a 0^{th} row of the coefficient matrix. After completing executing the subtask 0, the thread 1 executes the subtask 1 and reads a non-zero element in a 1^{st} row of the coefficient matrix. After completing executing the subtask 1, the thread 1 executes the subtask 2 and reads a non-zero element in a 2^{nd} row of the coefficient matrix. It can be learned that in the process in which the thread executes the subtasks 0, 1, and 2, subtask serial numbers are consecutive. Therefore, there is no discontinuous memory access. However, after the thread 1 completes executing the subtask 2, the thread 1 needs to execute the subtask 4 and read a non-zero element in a 4^{th} row of the coefficient matrix. In this case, the thread 1 needs to skip a non-zero element in a 3^{rd} row of the coefficient matrix in the memory, and then read the non-zero element in the 4^{th} row. In this case, memory access is discontinuous.

Optionally, for a case in which memory access is discontinuous, in this embodiment of this application, after the dependency relationship between the plurality of subtasks is obtained through analysis, the task processing method provided in this embodiment of this application further includes: for subtasks that have no dependency relationship, adjusting a storage location of data of a task, so that storage locations of data of tasks that can be executed in parallel are contiguous, for example, for the first subtask and a second subtask that are executed in parallel and have no dependency relationship, adjusting a storage location of data of the first subtask or a storage location of data of the second subtask, so that the storage location of the data of the first subtask and the storage location of the data of the second subtask are contiguous.

For example, the subtask 7 and the subtask 11 executed by the thread 1 in FIG. 14 are used as an example. There is no dependency relationship between the subtask 7 and the subtask 11, and the thread 1 may execute the subtask 7 and the subtask 11 in parallel. In this case, locations of data in a 7^{th} row and/or an 11^{th} row and data in a 7^{th} column and/or an 11^{th} column in the sparse matrix are adjusted, so that storage locations of data of the subtask 7 and data of the subtask 11 are contiguous.

In an implementation, for solving of the sparse triangular system, data of a subtask is data in the coefficient matrix of the sparse triangular system. The method for adjusting the storage location of the data of the task may include: rearranging the coefficient matrix of the sparse triangular system based on the execution sequence of the plurality of subtasks and the compute resources allocated to the plurality of subtasks, so that memory access is continuous in a process in which the thread executes the subtasks, and memory bandwidth is fully utilized. Specifically, the method for rearranging the coefficient matrix includes: for one thread, rearranging both rows and columns of the coefficient matrix based on subtask sequence numbers, and for different threads, rearranging corresponding rows and columns in the coefficient matrix based on thread sequence numbers.

The following describes a coefficient matrix rearrangement process by using an example. For the example shown in FIG. 14, the subtasks 0, 1, 2, 4, 5, 6, 7, 11, 8, 13, 14, 15, 16, 20, 17, 23, 25, and 26 correspond to the thread 1, and the subtasks 3, 9, 10, 12, 18, 19, 21, 22, and 24 correspond to the thread 2. Therefore, the rows of the coefficient matrix are arranged in a sequence of row indexes 0, 1, 2, 4, 5, 6, 7, 11, 8, 13, 14, 15, 16, 20, 17, 23, 25, 26, 3, 9, 10, 12, 18, 19, 21, 22 and 24.

The columns of the coefficient matrix also need to be rearranged in sequence based on the row arrangement sequence.

For example, the original 4^{th} row in the coefficient matrix is rearranged to the 3^{rd} row, and correspondingly, an original 4^{th} column in the coefficient matrix is rearranged to a 3^{rd} column. An original 5^{th} row in the coefficient matrix is rearranged to the 4^{th} row, and correspondingly, an original 5^{th} column in the coefficient matrix is rearranged to a 4^{th} column. An original 6^{th} row in the coefficient matrix is rearranged to the 5^{th} row, and correspondingly, an original 6^{th} column in the coefficient matrix is rearranged to the 5^{th} column. The columns of the coefficient matrix are rearranged according to this rule.

It should be noted that, in this embodiment of this application, rearranging the coefficient matrix is correspondingly rearranging both the rows and the columns of the coefficient matrix, to optimize memory access continuity, which does not change the dependency relationship between the subtasks and the execution sequence of the subtasks. Therefore, a solving result is not affected.

It may be understood that, in a subtask execution process, a component at a corresponding location of the solution vector needs to be accessed based on a column index of a non-zero element in the coefficient matrix. For example, for a component *x*₁₃, the component *x*₁₃ depends on components *x*₁, *x₃, x*₄, *x*₅, *x*₇, *x*₉, *x*₁₀, *x*₁₁, and *x*₁₂. When the component *x*₁₃ is solved, the components on which the component *x*₁₃ depends need to be read. Locations of these components are determined based on column indexes (1, 3, 4, 5, 7, 9, 10, 11, and 12) of non-zero elements corresponding to the component *x*₁₃ in a 13^{th} row of the coefficient matrix.

In this embodiment of this application, the structured grid of the 3D19 template is used as an example. A manner of storing the coefficient matrix in a structured manner is A[nₓ, n_{y}, n_{z}, 0:9]. This storage manner is storing a structured coefficient matrix (which may be referred to as a structured matrix). Herein, *nₓ, n_{y},* and *n_{z}* are size information of the structured grid. When *nₓ*=3, *n_{y}*=3, and *n_{z}*=3*,* a size of the structured matrix is 27×10. 0:9 indicates that column indexes of the structured matrix range from 0 to 9, and there are 10 elements.

The structured matrix is related to the structured grid of the grid compute task, and therefore may be referred to as a structured matrix. Correspondingly, in the structured grid, a quantity 27 of rows in the structured matrix corresponds to 27 points in the structured grid, and a quantity 10 of columns in the structured matrix corresponds to a quantity of points in a point association group in the structured grid.

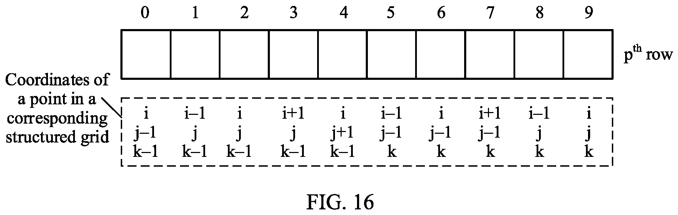

Refer to FIG. 16. A p^{th} row of the structured matrix is used as an example. The p^{th} row corresponds to a p^{th} point in the structured grid (a value of p is related to coordinates of the p^{th} point in the structured grid, and reference may be made to the foregoing embodiment). It can be learned from the feature of the structured grid that each point that is not on a boundary surface depends on other nine points. Therefore, in 10 elements in the p^{th} row, an element whose column index is 9 corresponds to the p^{th} point, and elements whose column indexes are 0 to 8 correspond to other points on which the p^{th} point in the structured grid depends. It is assumed that coordinates of the p^{th} point are (i, j, k), and coordinates of the points in the structured grid corresponding to the elements whose column indexes are 0 to 8 are respectively (i, j-1, k-1), (i-1, j, k-1), (i, j, k-1), (i+1, j, k-1), (i, j+1, k-1), (i-1, j-1, k), (i, j-1, k), (i+1, j-1, k) and (i-1, j, k). A coordinate relationship reflects a location relationship between the p^{th} point and each of the nine points on which the p^{th} point depends, namely, the location relationship obtained in the foregoing embodiment. The nine points are sequentially located on a lower front side, a lower left side, a lower side, a lower right side, a lower rear side, a left front side, a front side, a right front side, and a left side of the point p.

Because there is a mathematical relationship ( *p = i + j* × *nₓ + k* × *nₓ* × *n_{y}*) between coordinates of a point and an index of the point (namely, an index of a row), a column index of a non-zero element in the p^{th} row may be obtained through calculation based on coordinates of each point corresponding to the p^{th} row. The 13^{th} row is used as an example. Coordinates (i, j, k) of a point 13 in the structured grid are (1, 1, 1). Locations of non-zero elements (namely, column indexes of the non-zero elements) in the 13^{th} row in the coefficient matrix may be obtained through calculation based on coordinates of points in the 13^{th} row, and are respectively 1, 3, 4, 5, 7, 9, 10, 11, 12, and 13.

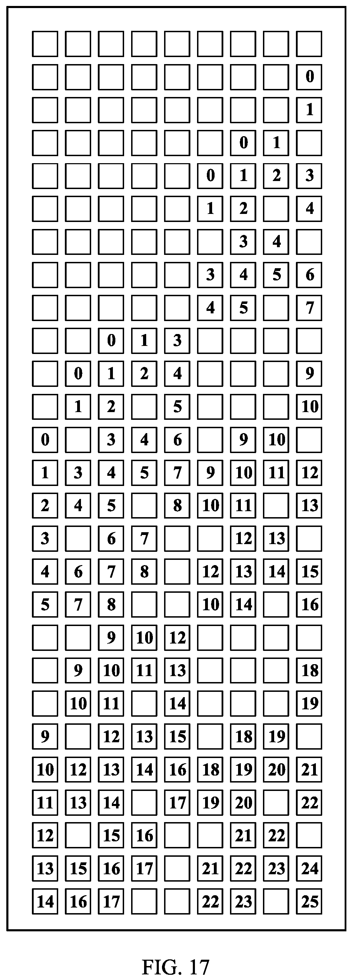

FIG. 17 briefly illustrates a structure of the structured matrix. An element at a shaded location in the matrix indicates that a non-zero element is stored. A column number of the non-zero element is calculated based on coordinates of a point. A value at the shaded location in the figure indicates the column number of the non-zero element. A value of the non-zero element is stored at a location of the non-zero element in the structured matrix.

In the foregoing, column coordinates of a non-zero element in the coefficient matrix may be directly calculated based on point coordinates in the structured grid corresponding to an element in the coefficient matrix, and a related component is read based on the column coordinates. Compared with the CSR format, a process of accessing the solution vector does not require secondary indexing (that is, a column index is first read from an array d, and then a component is read based on the column index). This can reduce a memory access amount, increase a memory access speed, and improve a computing-to-memory access ratio.

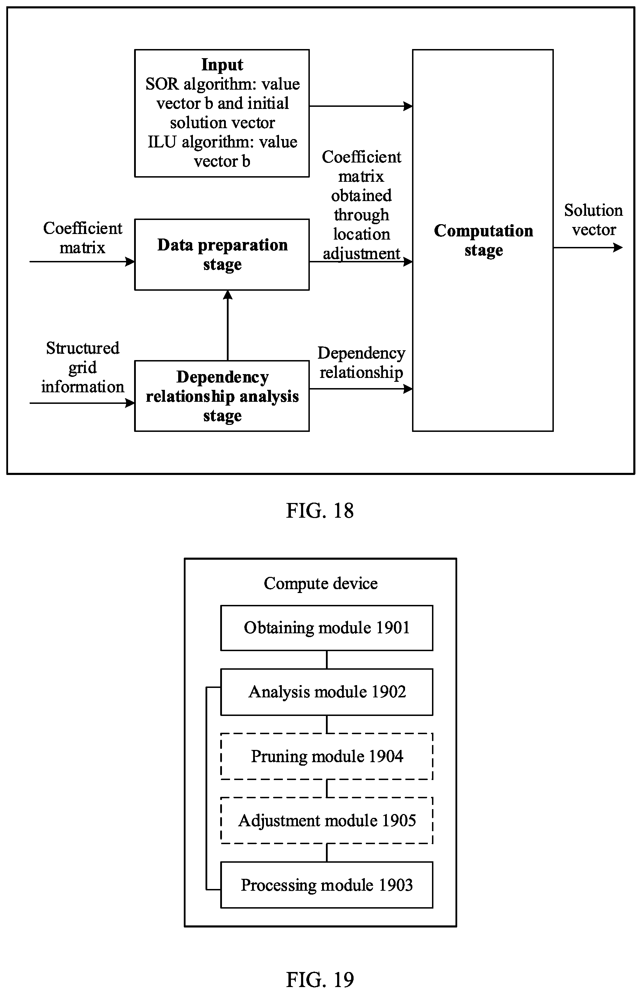

Refer to FIG. 18. Based on the foregoing content, the process of solving the sparse triangular system may include a dependency relationship analysis stage, a data preparation stage, and a calculation stage. The dependency relationship analysis stage means analyzing the dependency relationship between the plurality of subtasks based on the structured grid of the sparse triangular system, to obtain the dependency relationship between the plurality of subtasks. The data preparation stage is a process of adjusting a location of data in the coefficient matrix (or a structured coefficient matrix) based on the dependency relationship obtained through analysis. The calculation stage is a process of solving the sparse triangular system based on the dependency relationship between the subtasks, a coefficient matrix obtained through location adjustment, and other input information, to obtain the solution vector.

Optionally, an idea of solving the sparse triangular system may also be used to solve a matrix decomposition problem in an ILU algorithm. It can be learned from the descriptions in the foregoing embodiments that, in the ILU algorithm, a matrix is decomposed into an upper triangular matrix and a lower triangular matrix. For example, a sparse matrix **A** is decomposed, and **LU=A.** It can be learned that **U** or **L** may be considered as a solution vector, and **A** may be considered as a right-end vector. Therefore, a process of solving **U** or **L** is essentially a process of solving the sparse triangular system. Therefore, the method provided in embodiments of this application may also be used to perform ILU decomposition.

In the task processing method provided in embodiments of this application, because one vertex in the structured grid of the grid compute task corresponds to one subtask of the grid compute task, and each of the vertices in the structured grid and a vertex on which the vertex depend has a same location relationship, after a subtask on which a subtask depends is obtained through analysis based on the structured grid, another subtask on which each of the plurality of subtasks depends can be quickly obtained through analysis based on the same location relationship. That is, the dependency relationship between the plurality of subtasks can be quickly obtained through analysis based on the structured grid of the grid compute task. In this way, the grid compute task can be quickly processed, and service processing efficiency can be improved.

Further, in the task processing method provided in embodiments of this application, there is no need to analyze arrays stored in the CSR format one by one, but instead, the dependency relationship between the subtasks is obtained through analysis based on the structured grid. This can significantly reduce the memory access amount, and improve the computing-to-memory access ratio.

It may be understood that the foregoing method is performed by a compute device. To implement the foregoing functions, the compute device includes a corresponding hardware structure and/or software module for implementing each function. A person skilled in the art should easily be aware that, in composition with methods and steps of the examples described in embodiments disclosed in this specification, embodiments of this application may be implemented by hardware or a combination of hardware and computer software. Whether a function is implemented by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the compute device may be divided into functional modules based on the foregoing method examples, for example, each functional module may be obtained through division based on each corresponding function, or two or more functions may be integrated into one processing module. The foregoing integrated module may be implemented in a form of hardware, or may be implemented in a form of software functional module. It should be noted that, in embodiments of this application, module division is an example, and is merely a logical function division. In actual implementation, another division manner may be used.

When each functional module is obtained through division based on each corresponding function, FIG. 19 is a diagram of a possible structure of the compute device in the foregoing embodiments. The compute device includes an obtaining module 1901, an analysis module 1902, and a processing module 1903.

The obtaining module 1901 is configured to perform S601 in the foregoing method embodiment. The analysis module 1902 is configured to perform S602 (including S6021 and S6022), S603, and S1501 in the foregoing method embodiment. The processing module 1903 is configured to perform S604, S1505, and S1506 in the foregoing method embodiment.

Optionally, the compute device provided in this embodiment of this application further includes a pruning module 1904 and an adjustment module 1905. The pruning module 1904 is configured to perform S605 in the foregoing method embodiment. The adjustment module 1905 is configured to: for a first subtask and a second subtask that have no dependency relationship, adjust a storage location of data of the first subtask or data of the second subtask.

The modules of the compute device may be further configured to perform other actions in the foregoing method embodiments. All related content of each step in the foregoing method embodiments may be referenced to function descriptions of corresponding functional modules. Details are not described herein again.

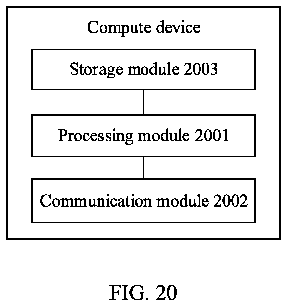

When an integrated unit is used, FIG. 20 is a diagram of another possible structure of the compute device in the foregoing embodiments. As shown in FIG. 20, the compute device provided in this embodiment of this application may include a processing module 2001 and a communication module 2002. The processing module 2001 may be configured to: control and manage an action of the compute device. For example, the processing module 2001 may be configured to support the obtaining module 1901, the analysis module 1902, the processing module 1903, the pruning module 1904, and the adjustment module 1905 in FIG. 19 in performing corresponding steps, and/or another process of the technology described in this specification. The communication module 2002 may be configured to support communication between the communication apparatus and another network entity. As shown in FIG. 20, the communication apparatus may further include a storage module 2003, configured to store computer instructions and data (for example, a coefficient matrix).

The processing module 2001 may be a processor or a controller (for example, the processing module 2001 may be the processor 501 in FIG. 5). The processing module 2001 may alternatively be a combination for implementing a computing function, for example, a combination including one or more microprocessors, or a combination of a DSP and a microprocessor. The communication module 2002 may be a communication interface (for example, the communication module 2002 may be the communication interface 503 in FIG. 5). The storage module 2003 may be a memory (for example, the storage module 2003 may be the memory 502 in FIG. 5). When the processing module 2001 is the processor, the communication module 2002 is the communication interface, and the storage module 2003 is the memory, the processor, a transceiver, and the memory may be connected through a bus.

For more details about implementing the foregoing functions by the modules included in the compute device, refer to the descriptions in the foregoing method embodiments. Details are not described herein again. Embodiments in this specification are all described in a progressive manner, for same or similar parts in embodiments, reference may be made to these embodiments, and each embodiment focuses on a difference from other embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules for implementation based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the method according to embodiments of this application. The foregoing storage medium includes any medium that can store program code, such as a flash memory, a removable hard disk, a read-only memory, a random access memory, a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A task processing method, comprising:
obtaining a grid compute task in an application, wherein the grid compute task comprises a plurality of subtasks, and dependency relationships between the plurality of subtasks conform to a dependency rule;
analyzing a dependency relationship between a first subtask and another subtask in the plurality of subtasks, and determining the dependency rule;
analyzing a dependency relationship between other subtasks in the plurality of subtasks according to the dependency rule; and
allocating a compute resource to the plurality of subtasks based on the dependency relationships between the plurality of subtasks, and executing the plurality of subtasks.

2. The method according to claim 1, wherein
the grid compute task is solving a triangular system through matrix multiplication.

3. The method according to claim 1 or 2, wherein the method further comprises:
for each of the plurality of subtasks, deleting a duplicated dependency relationship from dependency relationships between the subtask and other subtasks, to prune the dependency relationships between the plurality of subtasks.

4. The method according to any one of claims 1 to 3, wherein the method further comprises:
for the first subtask and a second subtask that are executed in parallel and that no dependency relationship, adjusting a storage location of data of the first subtask or a storage location of data of the second subtask, so that the storage location of the data of the first subtask and the storage location of the data of the second subtask are contiguous.

5. The method according to any one of claims 1 to 4, wherein a grid of the grid compute task is a structured grid, and a plurality of vertices of the structured grid are in a one-to-one correspondence with the plurality of subtasks; and analyzing the dependency relationship among the first subtask and the another subtask in the plurality of subtasks, and determining the dependency rule comprises:
analyzing at least one other vertex on which a first vertex corresponding to the first subtask depends; and
determining the dependency rule based on a location relationship between the first vertex and the at least one other vertex.

6. The method according to claim 5, wherein
the structured grid is a three-dimensional structured grid, and a relationship between an index number p of a subtask of the grid compute task and coordinates (i, j, k) of a vertex of the structured grid satisfies: $p = i + j \times {n}_{x} + k \times {n}_{x} \times {n}_{y} ,$ wherein
*nₓ* represents a quantity of grid cells of the structured grid in an x-axis direction, and *n_{y}* represents a quantity of grid cells of the structured grid in a y-axis direction.

7. A task processing apparatus, comprising an obtaining module, an analysis module, and a processing module, wherein
the obtaining module is configured to obtain a grid compute task in an application, wherein the grid compute task comprises a plurality of subtasks, and dependency relationships between the plurality of subtasks conform to a dependency rule;
the analysis module is configured to analyze a dependency relationship between a first subtask and another subtask in the plurality of subtasks, and determine the dependency rule;
the analysis module is further configured to analyze a dependency relationship between other subtasks in the plurality of subtasks according to the dependency rule; and
the processing module is configured to: allocate a compute resource to the plurality of subtasks based on the dependency relationships between the plurality of subtasks, and execute the plurality of subtasks.

8. The task processing apparatus according to claim 7, wherein
the grid compute task is solving a triangular system through matrix multiplication.

9. The task processing apparatus according to claim 7 or 8, further comprising a pruning module, wherein
the pruning module is configured to: for each of the plurality of subtasks, delete a duplicated dependency relationship from dependency relationships between the subtask and other subtasks, to prune the dependency relationships between the plurality of subtasks.

10. The task processing apparatus according to any one of claims 7 to 9, further comprising an adjustment module, wherein
the adjustment module is configured to: for the first subtask and a second subtask that are executed in parallel and have no dependency relationship, adjust a storage location of data of the first subtask or a storage location of data of the second subtask, so that the storage location of the data of the first subtask and the storage location of the data of the second subtask are contiguous.

11. The task processing apparatus according to any one of claims 7 to 9, wherein a grid of the grid compute task is a structured grid; and
the analysis module is specifically configured to: analyze at least one other vertex on which a first vertex corresponding to the first subtask depends; and determine the dependency rule based on a location relationship between the first vertex and the at least one other vertex.

12. The task processing apparatus according to claim 11, wherein
\the structured grid is a three-dimensional structured grid, and a relationship between an index number p of a subtask of the grid compute task and coordinates (i, j, k) of a vertex of the structured grid satisfies: $p = i + j \times {n}_{x} + k \times {n}_{x} \times {n}_{y} ,$ wherein
*nₓ* represents a quantity of grid cells of the structured grid in an x-axis direction, and *n_{y}* represents a quantity of grid cells of the structured grid in a *y*-axis direction.

13. A compute device, comprising a memory and at least one processor connected to the memory, wherein the memory is configured to store computer program code, the computer program code comprises computer instructions, and when the computer instructions are executed by the at least one processor, the processor is enabled to perform the method according to any one of claims 1 to 6.

14. A computer-readable storage medium, storing computer instructions, wherein when the computer instructions are run on a computer, the method according to any one of claims 1 to 6 is performed.
